(19) Europäisches Patentamt
European Patent Office
Office européen des brevets

(11) Veröffentlichungsnummer: **0 217 217 B1**

(12) **EUROPÄISCHE PATENTSCHRIFT**

(45) Veröffentlichungstag der Patentschrift: **17.06.92**

(51) Int. Cl.$^5$: **C09B 67/26**, C09B 69/02

(21) Anmeldenummer: **86112750.4**

(22) Anmeldetag: **16.09.86**

(54) **Flüssige, wasserhaltige Reaktivfarbstoffpräparationen.**

(30) Priorität: **28.09.85 DE 3534729**

(43) Veröffentlichungstag der Anmeldung:
**08.04.87 Patentblatt 87/15**

(45) Bekanntmachung des Hinweises auf die Patenterteilung:
**17.06.92 Patentblatt 92/25**

(84) Benannte Vertragsstaaten:
**BE CH DE FR GB IT LI**

(56) Entgegenhaltungen:
**EP-A- 0 059 782**
**EP-A- 0 087 703**
**EP-A- 0 092 119**
**EP-A- 0 167 952**

(73) Patentinhaber: **BAYER AG**
**W-5090 Leverkusen 1 Bayerwerk(DE)**

(72) Erfinder: **Wolff, Joachim, Dr.**
**Schlingkofer Strasse 38**
**W-5068 Odenthal(DE)**
Erfinder: **Wolf, Karlheinz, Dr.**
**Paul-Klee-Strasse 77**
**W-5090 Leverkusen(DE)**

**EP 0 217 217 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Anmeldung betrifft konzentrierte, wasserhaltige Präparationen und Reaktivfarbstoffen mit Monofluortriazinyl-Reaktivrest, gekennzeichnet durch einen pH-Wert von mindestens ≧ 8, vorzugsweise 8,5-10.

Die Präparationen, vorzugsweise Lösungen enthalten im allgemeinen 10 bis 35 Gew.-% eines Monofluortriazinfarbstoffs der Formel (1)

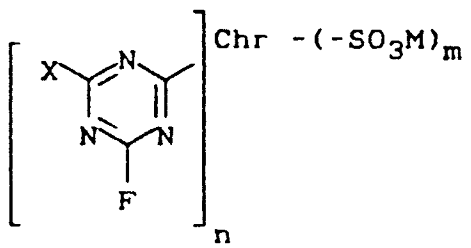

(1)

mit

n = ganze Zahl 1 oder 2
m = ganze Zahl von 1 bis 5
$M^+$ = $H^+$, $Na^+$, $Li^+$, $K^+$, bevorzugt Li oder Mischungen $Na^+/Li^+$
X = $NH_2$, $NHR^1$, $OR^1$, $CH_2R^1$ oder $SR^1$ wobei
$R^1$ = Alkyl (insbesondere gegebenenfalls durch OH, $SO_3H$, COOH substituiertes $C_1$-$C_4$-Alkyl), Aryl (insbesondere gegebenenfalls durch $SO_3H$, $C_1$-$C_4$-Alkyl, $C_1$-$C_4$-Alkoxy substituiertes Phenyl) oder Aralkyl (insbesondere gegebenenfalls durch $SO_3H$, $C_1$-$C_4$-Alkyl, $C_1$-$C_4$-Alkoxy substituiertes Benzyl) und
CHr = Chromophores System aus der Reihe der metallfreien oder metallhaltigen Mono- oder Polyazofarbstoffe, metallfreien oder metallhaltigen Azoporphinfarbstoffe wie Kupfer-, Nickel- oder Kobaltphthalocyaninfarbstoffe, der Anthrachinon-, Oxazin-, Dioxazin-, Triphenylmethan-, Nitro-, Azomethin-, metallfreien oder metallhaltigen Formazanfarbstoffe.

Das chromophore System kann neben Sulfogruppen weitere bei Farbstoffen übliche Substituenten aufweisen.

Derartige Farbstoffe sind in der Literatur in großer Zahl beschrieben (DE-A 1 644 208, 1 644 617, 2 536 640). Farbstoff 9g der EP 59 782 entspricht zwar den erfindungsgemäß einzusetzenden, es findet sich aber kein ausdrücklicher Hinweis darauf, daß Flüssigformulierungen mit diesem Farbstoff einen pH-Wert von 8 oder mehr aufweisen sollen. Angesichts des allgemeinen Fachwissens bezüglich der höheren Reaktivität von Fluortriazinfarbstoffen assoziiert der Fachmann zu dem Fluortriazinfarbstoff 9g der Entgegenhaltung einen pH-Wert von 6,5 und ordnet höhere pH-Werte allenfalls den genannten Chlor-triazinen vor.

Die Lösungen können gegebenenfalls bis zu 30 Gew.-% löslichkeitserhöhende wassermischbare organische Verbindungen enthalten, die zu keiner die Farbstärke mindernden Reaktion mit dem Farbstoff befähigt sind, beispielsweise niedere aliphatische oder cyclische Amide, bevorzugt ε-Caprolactam und seine Derivate sowie N-Alkylpyrrolidone und/oder schwefelhaltige Verbindungen wie Dimethylsulfon, Diethylsulfon, Sulfolen, Sulfolan und deren in α- oder β-Stellung substituierte Derivate und/oder hydrotrope Verbindungen wie Harnstoff und Thioharnstoff und deren Derivate bzw. Dicyandiamid sowie Ether mehrwertiger Alkohole. Vorzugsweise enthalten die Lösungen 2 bis 20 Gew.-% an derartigen Verbindungen.

Weiterhin können die Lösungen übliche Stellmittel wie nichtionische oder anionische Dispergiermittel, insbesondere Polyvinylpyrrolidone oder Kondensationsprodukte aus aromatischen Sulfonsäuren wie Naphthalinsulfonsäuren, Ditolylethersulfonsäuren oder Terphenylsulfonsäuren und Formaldehyd enthalten.

Die erfindungsgemäßen Lösungen können desweiteren Puffer für den Bereich pH = 8-12 enthalten. Diese werden im allgemeinen in Mengen bis etwa 5 Gew.-%, vorzugsweise bis 1 Gew.-% eingesetzt. Geeignete Puffer sind dabei insbesondere solche, die zu keiner die Farbstärke mindernden Reaktion mit dem Reaktivrest befähigt sind, insbesondere Alkalicarbonat/Alkalibicarbonat sowie gegebenenfalls auch Phosphate.

Der Gehalt an anorganischen Salzen wie LiCl, $Li_2SO_4$, NaCl, $Na_2SO_4$ soll im allgemeinen unter 10 Gew.-%, bevorzugt unter 3 Gew.-% liegen.

Solche salzarmen Produkte kann man auf verschiedene Weise erhalten:

a) Der salzarmen Produkte kann man auf verschiedene Weise erhalten: Fabrikware bzw. die getrocknete salzhaltige Farbrikware wird mehrfach mit mit destilliertem Wasser gewaschen und erneut isoliert.

b) Der bei der Synthese anfallende Farbstoffslurry wird mittels Druckpermeation entsalzt und aufkonzentriert (DE-A 2 948 292).

c) Besonders eignet sich das in der EP-A 87 703 beschriebene Verfahren.

Die erfindungsgemäßen konzentrierten Lösungen der Reaktivfarbstoffe (1) zeichnen sich durch eine hohe Lagerstabilität bei Temperaturen von -10 ° C bis 30 ° C aus. In hohem Maße überraschend ist, daß auch nach 4 Wochen 40 ° C keine nennenswerte Hydrolyse der Reaktivgruppe eintritt, obwohl diese Reaktivfarbstoffe bei pH > 8 unter Abspaltung von HF auf Baumwolle gefärbt werden.

Lagerstabile Lösungen von Reaktivfarbstoffen sind bereits bekannt, beispielsweise aus der DE-A 2 529 658, DE-A 2 948 292, DE-A 3 207 534. Die in den Beispielen aufgeführten Lösungen weisen generell einen pH-Wert zwischen 3 und 8 auf. Werden Monofluortriazinfarbstoffe jedoch längere Zeit bei einem pH-Wert < 8 bei höheren Temperaturen gelagert, so tritt auch bei Pufferung i.a. drastische Hydrolyse ein, so daß diese Lösungen nicht mehr für eine Baumwollreaktivfärbung geeignet sind (s. Bsp. 1). Es hat sich dagegen als im hohen Maße überraschend gezeigt, daß konzentrierte Lösungen der Reaktivfarbstoffe der Formel (1) erst bei einem pH-Wert > 8, bevorzugt ≧ 8,5 hydrolysenstabil sind.

Gegenstand der Erfindung ist weiterhin die Verwendung der erfindungsgemäßen Lösungen zur Zubereitung von Färbebädern und Druckpasten für die Anwendung auf natürlichen und synthetischen Substraten, insbesondere Baumwolle, Wolle, Regeneratcellulose, Seide, Papier und Leder.

Beispiel 1

150 g des salzarmen (< 3 Gew.-%) Reaktivfarbstoffe der Formel

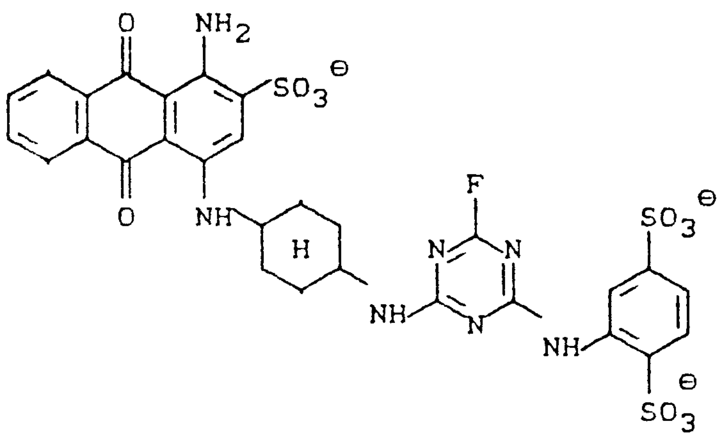

2 $Na^+$
1 $Li^+$ (2)

werden in 100 g ε-Caprolactam und 750 g Edelwasser gelöst, mit LiOH auf pH = 8,7 gestellt und mit 0,5 Gew.-% $NaHCO_3/Na_2CO_3$ gepuffert. Die Lösung zeigt auch nach 4 Wochen 40 ° C-Lagerung praktisch keine Hydrolyse.

Wird die entsprechende Farbstofflösung auf pH = 6,5 gestellt und gepuffert, so ist der Reaktivfarbstoff (2) nach 4 Wochen 40 ° C-Lagerung zu 60 % hydrolisiert.

Beispiel 2

150 g des salzarmen (< 2 Gew.-%) Reaktivfarbstoffs der Formel

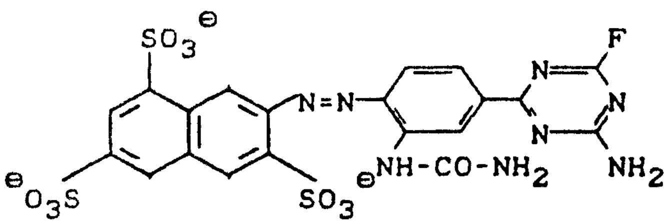

2 $Li^+$
1 $Na^+$ (3)

werden in 840 g Wasser und 20 g Dicyandiamid gelost, mit LiOH auf pH = 8,7 gestellt und mit 0,5 Gew.-% $NaHCO_3/Na_2CO_3$ gepuffert.

Beispiel 3

120 g des salzarmen (< 2 Gew.-%) Reaktivfarbstoffs der Formel

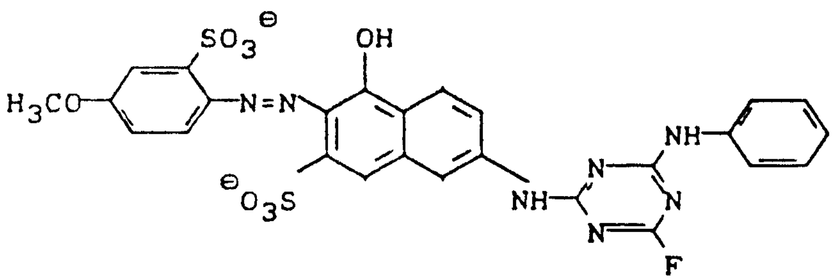

2 $Li^+$

(4)

werden in 870 g Wasser und 20 g Dicyandiamid gelöst, mit $LiOH \cdot H_2O$ auf pH = 8,7 gestellt und mit 0,5 Gew.-% $NaHCO_3/Na_2CO_3$ gepuffert.

Beispiel 4

150 g des salzarmen (< 3 Gew.-%) Reaktivfarbstoffs der Formel (5)

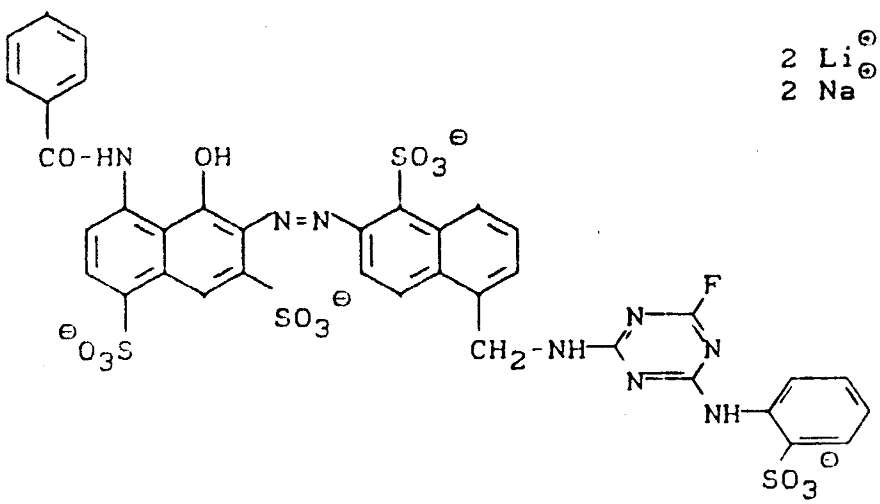

2 $Li^{\oplus}$
2 $Na^{\oplus}$

(5)

werden in 100 g ε-Caprolactam und 750 g Edelwasesr gelöst, mit LiOH auf pH = 8 gestellt und bei diesem pH-Wert mit 0,5 Gew.-% $NaHCO_3/Na_2CO_3$ gepuffert.

**Patentansprüche**
**Patentansprüche für folgende Vertragsstaaten : CH, DE, GB, FR**

1. Flüssige, wasserhaltige Präparationen von Reaktivfarbstoffen mit Monofluortriazinyl-Reaktivrest, gekennzeichnet durch einen pH-Wert von mindestens 8, ausgenommen Zusammensetzungen gemäß Beispiel 5 der EP-A-167 952 enthaltend 11,5 % eines Farbstoffs der Formel

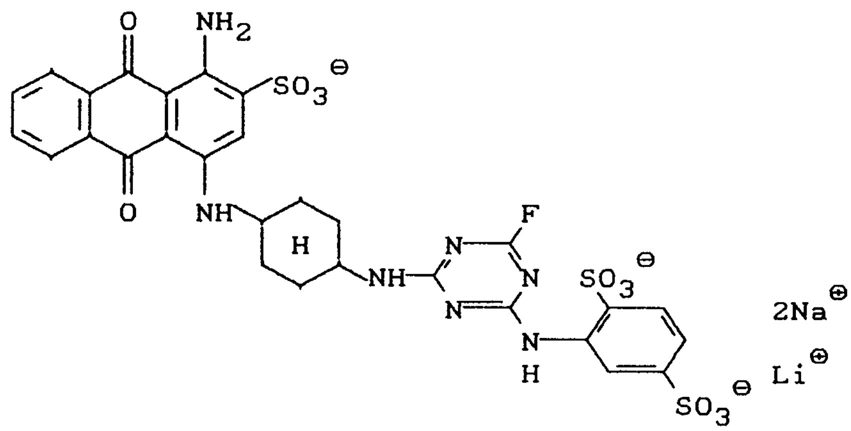

15 % ε-Caprolactam,
3 % Dicyandiamid,
0,5 % $Na_2HPO_4$,
1 % $Na_2SO_4$, NaCl
ad 100 Gew.-% Wasser.

2. Präparationen gemäß Anspruch 1 enthaltend 10-35 Gew.-% Farbstoff der Formel

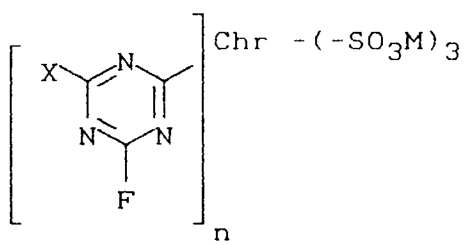

(1)

mit

| | |
|---|---|
| n = | ganze Zahl 1 oder 2 |
| m = | ganze Zahl von 1 bis 5 |
| $M^+$ = | $H^+$, $Na^+$, $Li^+$, $K^+$, bevorzugt Li oder Mischungen $Na^+/Li^+$ |
| X = | $NH_2$, $NHR^1$, $OR^1$, $CH_2R^1$ oder $SR^1$ wobei |
| $R^1$ = | Alkyl (insbesondere gegebenenfalls durch OH, $SO_3H$, COOH substituiertes $C_1$-$C_4$-Alkyl), Aryl (insbesondere gegebenenfalls durch $SO_3H$, $C_1$-$C_4$-Alkyl, $C_1$-$C_4$-Alkoxy substituiertes Phenyl) oder Aralkyl (insbesondere gegebenenfalls durch, $SO_3H$, $C_1$-$C_4$-Alkyl, $C_1$-$C_4$-Alkoxy substituiertes Benzyl) und |
| CHr = | Chromophores System aus der Reihe der metallfreien oder metallhaltigen Mono- oder Polyazofarbstoffe, metallfreien oder metallhaltigen Azoporphinfarbstoffe wie Kupfer-, Nickel- oder Kobaltphthalocyaninfarbstoffe, der Anthrachinon-, Oxazin-, Dioxazin-, Triphenylmethan-, Nitro-, Azomethin-, metallfreien oder metallhaltigen Formazanfarbstoffe. |

3. Präparationen gemäß wenigstens einem der Ansprüche 1 und 2, enthaltend bis zu 30 Gew.-% wassermischbare organische Verbindungen, die zu keiner die Farbstärke mindernden Reaktion mit den Reaktivfarbstoff befähigt sind.

4. Präparationen gemäß wenigstens einem der Ansprüche 1-3, enthaltend < 5 Gew.-% Puffersubstanzen für den pH-Bereich 8-12.

5. Präparationen gemäß wenigstens einem der Ansprüche 1-4 enthaltend $HCO_3^{\ominus}/CO_3^{2-}$-Puffer.

6. Präparationen gemäß wenigstens einem der Ansprüche 1-5 enthaltend ε-Caprolactam und/oder Dicyandiamid.

7. Präparationen gemäß wenigstens einem der Ansprüche 1-6 enthaltend bezogen auf 1 mol Farbstoff mindestens 1 mol $Li^{\oplus}$.

8. Präparationen gemäß wenigstens einem der Ansprüche 1-7, dadurch gekennzeichnet, daß der pH-Wert wenigstens 8,5 beträgt.

9. Präparationen gemäß wenigstens einem der Ansprüche 2 bis 8, dadurch gekennzeichnet, daß X = $NHR^1$, wobei $R^1$ durch $SO_3H$, COOH substituiertes $C_1$-$C_4$-Alkyl ist.

**Patentansprüche für folgende Vertragsstaaten : BE, IT**

1. Flüssige, wasserhaltige Präparationen von Reaktivfarbstoffen mit Monofluortriazinyl-Reaktivrest, gekennzeichnet durch einen pH-Wert von mindestens 8.

2. Präparationen gemäß Anspruch 1 enthaltend 10-35 Gew.-% Farbstoff der Formel

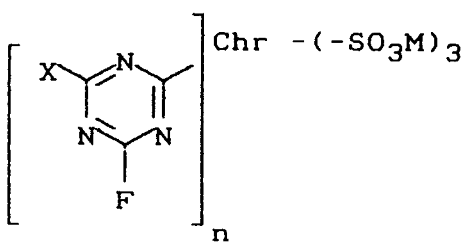

(1)

mit

| | |
|---|---|
| n = | ganze Zahl 1 oder 2 |
| m = | ganze Zahl von 1 bis 5 |
| $M^+$ = | $H^+$, $Na^+$, $Li^+$, $K^+$, bevorzugt Li oder Mischungen $Na^+/Li^+$ |
| X = | $NH_2$, $NHR^1$, $OR^1$, $CH_2R^1$ oder $SR^1$ wobei |
| $R^1$ = | Alkyl (insbesondere gegebenenfalls durch OH, $SO_3H$, COOH substituiertes $C_1$-$C_4$-Alkyl), Aryl (insbesondere gegebenenfalls durch $SO_3H$, $C_1$-$C_4$-Alkyl, $C_1$-$C_4$-Alkoxy substituiertes Phenyl) oder Aralkyl (insbesondere gegebenenfalls durch, $SO_3H$, $C_1$-$C_4$-Alkyl, $C_1$-$C_4$-Alkoxy substituiertes Benzyl) und |
| CHr = | Chromophores System aus der Reihe der metallfreien oder metallhaltigen Mono- oder Polyazofarbstoffe, metallfreien oder metallhaltigen Azoporphinfarbstoffe wie Kupfer-, Nickel- oder Kobaltphthalocyaninfarbstoffe, der Anthrachinon-, Oxazin-, Dioxazin-, Triphenylmethan-, Nitro-, Azomethin-, metallfreien oder metallhaltigen Formazanfarbstoffe. |

3. Präparationen gemäß wenigstens einem der Ansprüche 1 und 2, enthaltend bis zu 30 Gew.-% wassermischbare organische Verbindungen, die zu keiner die Farbstärke mindernden Reaktion mit den Reaktivfarbstoff befähigt sind.

4. Präparationen gemäß wenigstens einem der Ansprüche 1-3, enthaltend < 5 Gew.-% Puffersubstanzen für den pH-Bereich 8-12.

5. Präparationen gemäß wenigstens einem der Ansprüche 1-4 enthaltend $HCO_3^{\ominus}/CO_3^{2-}$-Puffer.

6. Präparationen gemäß wenigstens einem der Ansprüche 1-5 enthaltend ε-Caprolactam und/oder Dicyandiamid.

7. Präparationen gemäß wenigstens einem der Ansprüche 1-6 enthaltend bezogen auf 1 mol Farbstoff

mindestens 1 mol $Li^{\oplus}$.

**8.** Präparationen gemäß wenigstens einem der Ansprüche 1-7, dadurch gekennzeichnet, daß der pH-Wert wenigstens 8,5 beträgt.

**9.** Präparationen gemäß wenigstens einem der Ansprüche 2 bis 8, dadurch gekennzeichnet, daß X = $NHR^1$, wobei $R^1$ durch $SO_3H$, COOH substituiertes $C_1$-$C_4$-Alkyl ist.

**Claims**

**Claims for the following Contracting States : CH, DE, GB, FR**

**1.** Liquid water-containing preparations of reactive dyestuffs with a monofluorotriazinyl reactive radical, characterised by a pH value of at least 8, with the exception of compositions according to Example 5 of EP-A-167,952 containing 11.5% of a dyestuff of the formula

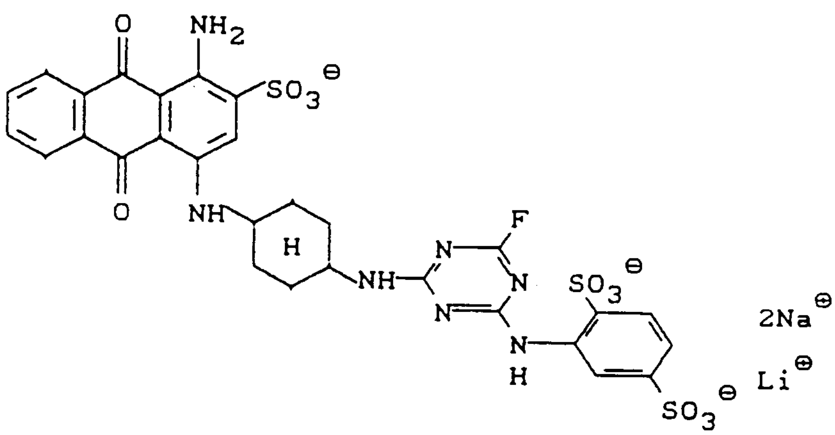

15 % of $\epsilon$-caprolactam,
3 % of dicyandiamide,
0.5 % of $Na_2HPO_4$,
1 % of $Na_2SO_4$, NaCl
remainder to 100% by weight of water.

**2.** Preparations according to Claim 1, containing 10-35% by weight of a dyestuff of the formula

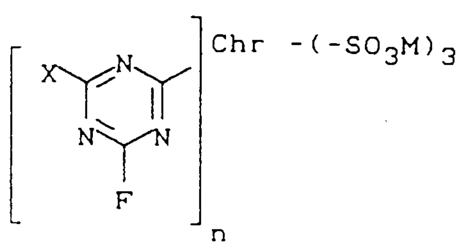

(1)

where

| | |
|---|---|
| n = | the integer 1 or 2, |
| m = | an integer from 1 to 5, |
| $M^+$ = | $H^+$, $Na^+$, $Li^+$ or $K^+$, preferably Li or mixtures of $Na^+/Li^+$, |
| X = | $NH_2$, $NHR^1$, $OR^1$, $CH_2R^1$ or $SR^1$, where |
| $R^1$ = | alkyl (in particular $C_1$-$C_4$-alkyl which is optionally substituted by OH, $SO_3H$ or COOH), aryl (in particular phenyl which is optionally substituted by $SO_3H$, $C_1$-$C_4$-alkyl or $C_1$-$C_4$-alkoxy) or aralkyl (in particular benzyl which is optionally substituted by $SO_3H$, $C_1$-$C_4$-alkyl or $C_1$- |

$C_4$-alkoxy) and

CHr = a chromophoric system from the series comprising metal-free or metal-containing mono- or polyazo dyestuffs, metal-free or metal-containing azoporphine dyestuffs, such as copper, nickel or cobalt phthalocyanine dyestuffs, and the anthraquinone, oxazine, dioxazine, triphenylmethane, nitro, azomethine and metal-free or metal-containing formazan dyestuffs.

**3.** Preparations according to at least one of Claims 1 and 2, containing up to 30% by weight of water-miscible organic compounds which are not capable of undergoing any reaction with the reactive dyestuff which reduces the tinctorial strength.

**4.** Preparations according to at least one of Claims 1-3, containing < 5% by weight of buffer substances for the pH range 8-12.

**5.** Preparations according to at least one of Claims 1-4, containing $HCO_3^{\ominus}/CO_3^{2-}$ buffers.

**6.** Preparations according to at least one of Claims 1-5, containing $\epsilon$-caprolactam and/or dicyandiamide.

**7.** Preparations according to at least one of Claims 1-6, containing at least 1 mol of $Li^{\oplus}$ per mole of dyestuff.

**8.** Preparations according to at least one of Claims 1-7, characterised in that the pH value is at least 8.5.

**9.** Preparations according to at least one of Claims 2 to 8, characterised in that X = $NHR^1$, where $R^1$ is $SO_3H$- or COOH-substituted $C_1$-$C_4$-alkyl.

**Claims for the following Contracting States : BE, IT**

**1.** Liquid water-containing preparations of reactive dyestuffs with a monofluorotriazinyl reactive radical, characterised by a pH value of at least 8.

**2.** Preparations according to Claim 1, containing 10-35% by weight of a dyestuff of the formula

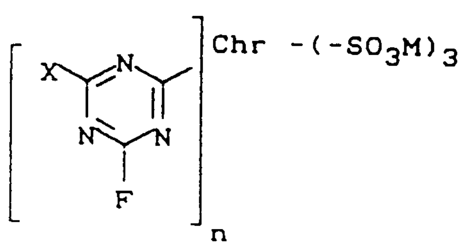

(1)

where

n = the integer 1 or 2,

m = an integer from 1 to 5,

$M^+$ = $H^+$, $Na^+$, $Li^+$ or $K^+$, preferably Li or mixtures of $Na^+/Li^+$,

X = $NH_2$, $NHR^1$, $OR^1$, $CH_2R^1$ or $SR^1$, where

$R^1$ = alkyl (in particular $C_1$-$C_4$-alkyl which is optionally substituted by OH, $SO_3H$ or COOH), aryl (in particular phenyl which is optionally substituted by $SO_3H$, $C_1$-$C_4$-alkyl or $C_1$-$C_4$-alkoxy) or aralkyl (in particular benzyl which is optionally substituted by $SO_3H$, $C_1$-$C_4$-alkyl or $C_1$-$C_4$-alkoxy) and

CHr = a chromophoric system from the series comprising metal-free or metal-containing mono- or polyazo dyestuffs, metal-free or metal-containing azoporphine dyestuffs, such as copper, nickel or cobalt phthalocyanine dyestuffs, and the anthraquinone, oxazine, dioxazine, triphenylmethane, nitro, azomethine and metal-free or metal-containing formazan dyestuffs.

3. Preparations according to at least one of Claims 1 and 2, containing up to 30% by weight of water-miscible organic compounds which are not capable of undergoing any reaction with the reactive dyestuff which reduces the tinctorial strength.

4. Preparations according to at least one of Claims 1-3, containing < 5% by weight of buffer substances for the pH range 8-12.

5. Preparations according to at least one of Claims 1-4, containing $HCO_3^{\ominus}/CO_3^{2-}$ buffers.

6. Preparations according to at least one of Claims 1-5, containing ϵ-caprolactam and/or dicyandiamide.

7. Preparations according to at least one of Claims 1-6, containing at least 1 mol of $Li^{\oplus}$ per mole of dyestuff.

8. Preparations according to at least one of Claims 1-7, characterised in that the pH value is at least 8.5.

9. Preparations according to at least one of Claims 2 to 8, characterised in that X = $NHR^1$, where $R^1$ is $SO_3H$- or COOH-substituted $C_1$-$C_4$-alkyl.

**Revendications**
**Revendications pour les Etats contractants suivants : CH, DE, GB, FR**

1. Préparations liquides aqueuses de colorants réactifs avec un radical réactif monofluorotriazinyle, caractérisées par une valeur de pH d'au moins 8, excepté les compositions mentionnées à l'exemple 5 du document EP-A-167 952 et contenant 11,5% d'un colorant selon la formule

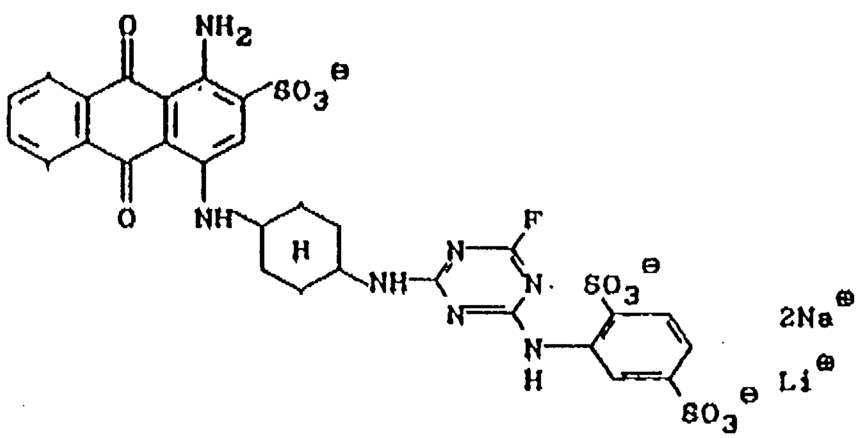

15% ϵ-caprolactame
3% dicyanodiamide
0,5% $Na_2HPO_4$
1% $Na_2SO_4$, NaCl
assez d'eau pour faire 100%.

2. Préparations selon la revendication 1, contenant 10 à 35% en poids de colorant selon la formule

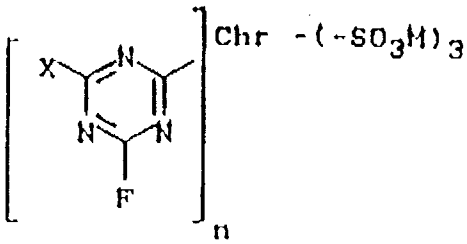

(1)

dans laquelle

| | |
|---|---|
| n = | un nombre entier 1 ou 2 |
| m = | un nombre entier allant de 1 à 5 |
| $M^+$ = | $H^+$, $Na^+$, $Li^+$, $K^+$, de préférence Li ou des mélanges $Na^+/Li^+$ |
| X = | $NH_2$, $NHR^1$, $OR^1$, $CH_2R^1$ ou $SR^1$ où |
| $R^1$ = | un radical alkyle (et, en particulier, un radical alkyle en $C_1$-$C_4$ substitué éventuellement par OH, $SO_3H$, COOH)<br>un radical aryle (et, en particulier, un radical alkyle en $C_1$-$C_4$ substitué éventuellement par $SO_3H$ ou un radical phényle substitué par un alcoxy en $C_1$-$C_4$) ou<br>un radical aralkyle (et, en particulier, un radical alkyle en $C_1$-$C_4$ substitué éventuellement par $SO_3H$), ou un radical benzyle substitué par un alcoxy en $C_1$-$C_4$) et |
| CHr = | un système chromophore choisi dans la série des colorants mono- ou polyazo, contenant ou non un métal, des colorants azoporphiniques contenant ou non un métal, tels que les colorants de phtalocyanine au cuivre, au nickel ou au cobalt, les colorants d'anthraquinone, d'oxazine, de dioxazine, de triphénylméthane, les colorants nitro, ceux d'azométhine et de formazane contenant ou non un métal. |

**3.** Préparations selon au moins l'une des revendications 1 et 2, contenant jusqu'à 30% en poids de composés organiques solubles dans l'eau, qui avec le colorant réactif ne donnent lieu à aucune réaction diminuent le pouvoir colorant.

**4.** Préparations selon au moins l'une des revendications 1-3 contenant < 5% en poids de substances tampons pour la gamme de pH de 8 à 12.

**5.** Préparations selon au moins l'une des revendications 1-4 contenant un tampon $HCO_3^-/CO_3^{2-}$.

**6.** Préparations selon au moins l'une des revendications 1 à 5, contenant du $\epsilon$-caprolactame et/ou du dicyanodiamide.

**7.** Préparations selon au moins l'une des revendications 1 à 6, contenant au moins une mole de $Li^+$ rapportée à une mole de colorant.

**8.** Préparations selon au moins l'une des revendications 1 à 7, caractérisées en ce que la valeur de pH est égale au moins à 8,5.

**9.** Préparations selon au moins l'une des revendications 2 à 8, caractérisées en ce que X = $NHR^1$, dans lequel $R^1$ est un alkyle en $C_1$-$C_4$ substitué par $SO_3H$, COOH.

**Revendications pour les Etats contractants suivants : BE, IT**

**1.** Préparations liquides aqueuses de colorants réactifs avec un radical réactif monofluorotriazinyle, caractérisées par une valeur de pH d'au moins 8.

**2.** Préparations selon la revendication 1, contenant 10 à 35% en poids de colorant selon la formule

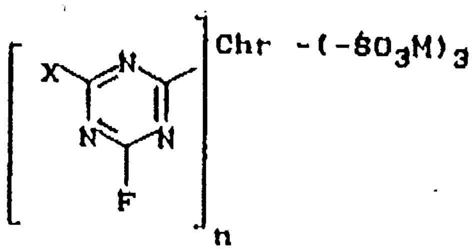

(I)

dans laquelle

n = un nombre entier 1 ou 2

m = un nombre entier allant de 1 à 5

$M^+$ = $H^+$, $Na^+$, $Li^+$, $K^+$, de préférence Li ou des mélanges $Na^+/Li^+$

X = $NH_2$, $NHR^1$, $OR^1$, $CH_2R^1$ ou $SR^1$ où

$R^1$ = un radical alkyle (et, en particulier, un radical alkyle en $C_1$-$C_4$ substitué éventuellement par OH, $SO_3H$, COOH)
un radical aryle (et, en particulier, un radical alkyle en $C_1$-$C_4$ substitué éventuellement par $SO_3H$ ou un radical phényle substitué par un alcoxy en $C_1$-$C_4$) ou
un radical aralkyle (et, en particulier, un radical benzyle substitué éventuellement par $SO_3H$, un alkyle en $C_1$-$C_4$ ou un alcoxy en $C_1$-$C_4$) et

CHr = un système chromophore choisi dans la série des colorants mono- ou polyazo, contenant ou non un métal, des colorants azoporphiniques contenant ou non un métal, tels que les colorants de phtalocyanine au cuivre, au nickel ou au cobalt, les colorants d'anthraquinone, d'oxazine, de dioxazine, de triphénylméthane, les colorants nitro, ceux d'azométhine et de formazane contenant ou non un métal.

**3.** Préparations selon au moins l'une des revendications 1 et 2, contenant jusqu'à 30% en poids de composés organiques solubles dans l'eau, qui avec le colorant réactif ne donnent lieu à aucune réaction diminuant le pouvoir colorant.

**4.** Préparations selon au moins l'une des revendications 1-3 contenant < 5% en poids de substances tampons pour la gamme de pH de 8 à 12.

**5.** Préparations selon au moins l'une des revendications 1-4 contenant un tampon $HCO_3^-/CO_3^{2-}$.

**6.** Préparations selon au moins l'une des revendications 1 à 5, contenant du $\epsilon$-caprolactame et/ou du dicyanodiamide.

**7.** Préparations selon au moins l'une des revendications 1 à 6, contenant au moins une mole de $Li^+$ rapportée à une mole de colorant.

**8.** Préparations selon au moins l'une des revendications 1 à 7, caractérisées en ce que la valeur de pH est égale au moins à 8,5.

**9.** Préparations selon au moins l'une des revendications 2 à 8, caractérisées en ce que X = $NHR^1$, dans lequel $R^1$ est un alkyle en $C_1$-$C_4$ substitué par $SO_3H$, COOH.